# EUROPEAN PATENT SPECIFICATION

(11) **EP 4 130 676 B1**
(45) Date of publication and mention of the grant of the patent: **26.03.2025**
(21) Application number: 22182172.1
(22) Date of filing: 30.06.2022
(51) Int. Cl.: G01C 23/00, G08G 5/00

(54) **SYSTEMS AND METHODS FOR CORRELATING A NOTICE TO AIRMEN (NOTAM) WITH A CHART ON AN AVIONIC DISPLAY IN A COCKPIT OF AN AIRCRAFT**
SYSTEME UND VERFAHREN ZUM KORRELIEREN EINER BENACHRICHTIGUNG FÜR FLUGPERSONAL (NOTAM) MIT EINER KARTE AUF EINER AVIONISCHEN ANZEIGE IN EINEM COCKPIT EINES FLUGZEUGS
SYSTÈMES ET PROCÉDÉS PERMETTANT DE CORRÉLER UN AVIS À DES AVIATEURS (NOTAM) AVEC UNE CARTE SUR UN ÉCRAN D'AVION DANS UN POSTE DE PILOTAGE D'UN AÉRONEF

(30) Priority: 20.07.2021 IN 202111032527; 16.09.2021 US 202117476806
(43) Date of publication of application: 08.02.2023
(73) Proprietor: Honeywell International Inc., Charlotte, NC 28202 (US)
(72) Inventor: DESAI, Pavan Kumar Yardoni, Charlotte, 28202 (US); AJJAVARA, Atmacharan, Charlotte, 28202 (US); MATHEW, Bincicil, Charlotte, 28202 (US); NAGANUR, Dayavati, Charlotte, 28202 (US); K, Pooja Pai, Charlotte, 28202 (US)
(74) Representative: LKGlobal UK Ltd.

(56) References cited:
- US-A1- 2012 274 484
- US-A1- 2013 027 226
- US-A1- 2016 209 234
- US-A1- 2016 217 693
- US-A1- 2018 059 907
- US-A1- 2020 168 104

## Description

### CROSS REFERENCE TO RELATED APPLICATION

This application claims priority to India Provisional Patent Application No. 202111032527, filed July 20, 2021.

### TECHNICAL FIELD

The following disclosure generally relates to display systems for mobile vehicles. More particularly, the following disclosure relates to systems and methods for correlating a Notice to Airmen (NOTAM) with a chart on an avionic display in a cockpit of an aircraft.

### BACKGROUND

A NOTAM is the abbreviated name for 'A Notice to Airmen.' The FAA description of a NOTAM is a notice containing information (not known sufficiently in advance to publicize by other means) concerning the establishment, condition, or change in any component (facility, service, procedure of, or hazard in the National Airspace System) the timely knowledge of which is essential to personnel concerned with flight operations. Basically, a NOTAM is a notification from an official body alerting an airspace user to hazards along their route, both in the air and on the ground. This could be a closed taxiway, a notification about construction cranes or maintenance on a navigation aid.

A NOTAM that is provided for an airport is usually associated with, or references, a chart that is published for the airport, and generally contains vital information about that chart. These NOTAMs mostly refer to charts either by a chart name or a chart index number. A NOTAM can also refer to a procedure. Document US 2016/209234 A1 discloses a flight display that displays charts and a list of NOTAM text messages, wherein the location on the chart corresponding to the selected NOTAM message is highlighted.

The Pilot who reads the NOTAM associated with a chart or a procedure may be interested in opening the referenced chart. However, a technical problem can occur when there is no direct means to open the chart referenced in the NOTAM. Instead, after reading the NOTAM, the pilot may have to memorize the chart name/chart index number, and manually select the chart on a chart screen, or in paper, by browsing through a list of charts. This increases pilot's cognitive workload.

Accordingly, improved flight display systems and methods for finding chart information based on a NOTAM are desired. Furthermore, other desirable features and characteristics of the disclosure will become apparent from the subsequent detailed description and the appended claims, taken in conjunction with the accompanying drawings, summary, technical field, and this background of the disclosure.

### BRIEF SUMMARY

This summary is provided to describe select concepts in a simplified form that are further described in the Detailed Description. This summary is not intended to identify key or essential features of the claimed subject matter, nor is it intended to be used as an aid in determining the

Provided is a system for correlating a Notice to Airmen (NOTAM) with a chart on an avionic display in a cockpit of an aircraft, the system comprising: a flight management system (FMS); a position determining system; a database comprising a plurality of pre-loaded charts; a source of a NOTAM; a controller circuit operably coupled to the FMS, position determining system, database, and source of the NOTAM, the controller circuit configured by programming instructions to, receive, from the FMS, a flight plan (FP); receive, from the position determining system, a position and location of the aircraft; render the avionic display comprising a chart page or a NOTAM page; receive the NOTAM; determine that the NOTAM is relevant, when the NOTAM is concurrently related to the FP and references a chart of the plurality of pre-loaded charts, and render a selectable visual indicator of the chart on the NOTAM page of the avionic display, responsive thereto; and when the NOTAM is related to the chart page displayed on the avionic display, (i) further identify the NOTAM as relevant, and (ii) render a selectable visual indicator of the NOTAM on the chart page displayed on the avionic display, responsive thereto.

Also provided is a method for correlating a Notice to Airmen (NOTAM) with a chart on an avionic display in a cockpit of an aircraft, the method comprising: at a controller circuit, receiving, from a flight management system (FMS), a flight plan (FP); receiving, from a position determining system, a position and location of the aircraft; rendering an avionic display comprising a chart page or a NOTAM page; receiving a NOTAM; determining that the NOTAM is relevant, when the NOTAM is concurrently related to the FP and references a chart of a plurality of pre-loaded charts onboard the aircraft, and rendering a selectable visual indicator of the chart on the NOTAM page of the avionic display responsive thereto; and when the NOTAM is related to the chart page displayed on the avionic display, further identify the NOTAM as relevant, and rendering a selectable visual indicator of the NOTAM on the chart page displayed on the avionic display, responsive thereto.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWING FIGURES

At least one example of the present invention will hereinafter be described in conjunction with the following figures, wherein like numerals denote like elements, and:
FIG. 1 shows a functional block diagram of an aircraft including various systems, including a system for correlating a Notice to Airmen (NOTAM) with a chart on an avionic display in a cockpit of an aircraft, in accordance with exemplary embodiments of the present disclosure;
FIG. 2 is a flowchart illustrating a method for correlating a Notice to Airmen (NOTAM) with a chart on an avionic display in a cockpit of an aircraft, in accordance with exemplary embodiments of the present disclosure;
FIGS. 3-4 are examples of NOTAM text pages on an avionics display, in accordance with exemplary embodiments of the present disclosure; and
FIGS. 5-8 are examples of chart pages displayed on an avionics display, in accordance with exemplary embodiments of the present disclosure.

### DETAILED DESCRIPTION

The following detailed description is merely exemplary in nature and is not intended to limit the invention or the application and uses of the invention. As used herein, the word "exemplary" means "serving as an example, instance, or illustration." Thus, any weather or flight display system or method embodiment described herein as "exemplary" is not necessarily to be construed as preferred or advantageous over other embodiments. All the embodiments described herein are exemplary embodiments provided to enable persons skilled in the art to make or use the invention and not to limit the scope of the invention which is defined by the claims.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, programmable logic arrays, application specific integrated circuits, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

As mentioned, a NOTAM is basically a notification from an official body alerting an airspace user to hazards along their route, both in the air and on the ground. Non-limiting examples of NOTAMs include a closed taxiway, a notification about a presence of construction cranes, or a notification of maintenance on equipment, such as, a land-based navigation aid.

A NOTAM that is provided for an airport is usually associated with, or references, a chart that is published for the airport, and generally contains vital information about that chart. These NOTAMs mostly refer to charts either by a chart name or a chart index number. A NOTAM can also refer to a procedure.

The Pilot who reads the NOTAM associated with a chart or a procedure may be interested in opening the referenced chart. However, a technical problem can occur when there is no direct means to open the chart. Instead, after reading the NOTAM, the pilot must memorize the chart name or chart index number and manually select the chart on a chart screen, or in paper, by browsing through a list of charts. This increases pilot's cognitive workload.

The technical problem is further exacerbated because NOTAMs can be either real-time, and asynchronous, or known well enough in advance to be published in a NOTAM database that is uploaded into an aircraft before it begins a flight. A NOTAM that is received in real-time is often safety-related, and must be relayed to the pilots immediately, as it can include changes to routes, altitudes, speeds, obstructions, etc. (i.e., anything published on the chart to which it references).

A technical solution is disclosed herein in the form of systems and methods for correlating a Notice to Airmen (NOTAM) with a chart displayed on an avionic display in a cockpit of an aircraft. As used herein, correlate means to associate, or to cross-link (electronically) a NOTAM with the chart to which it references, such that a user interacting via the human-machine interface (HMI) can seamlessly switch from displaying one to displaying the other on an avionic display.

While the following exemplary embodiments are discussed in terms of an aircraft in flight, it should be appreciated that other embodiments may be employed in other contexts that currently rely on a regulated, periodically updated navigation database.

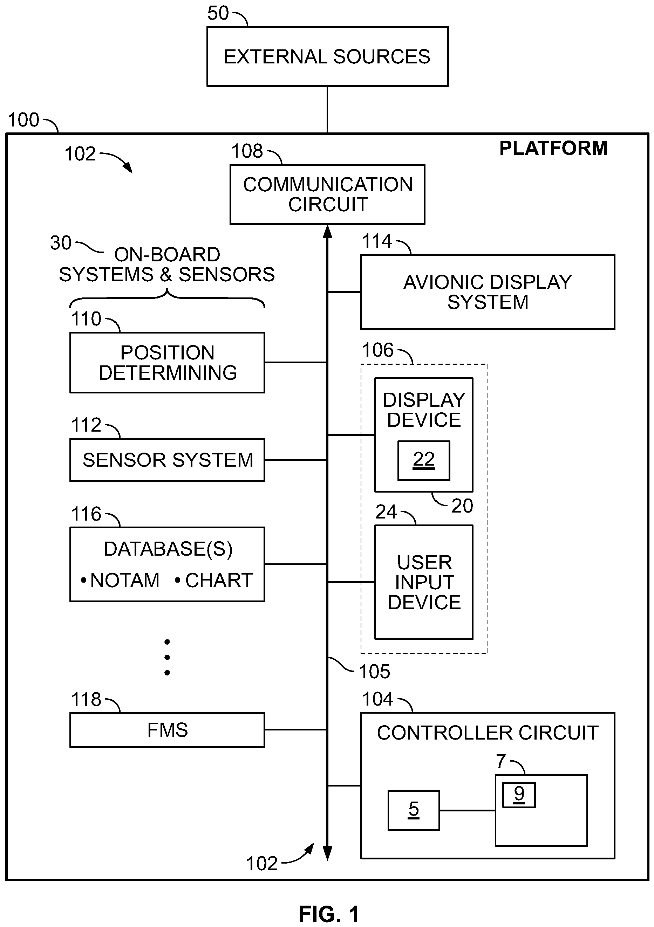

FIG. 1 is a block diagram of a system for correlating a Notice to Airmen (NOTAM) with a chart on an avionic display in a cockpit of an aircraft (shortened herein to "system" 102), in accordance with an exemplary and non-limiting embodiment of the present disclosure. The system **102** may be utilized onboard a mobile platform to provide calibration of displayed synthetic images, as described herein. In various embodiments, the mobile platform is an aircraft **100,** which carries or is equipped with the system **102.** Aircraft **100** may be any type of vehicle that can travel through the air (*i.e.,* without physical contact with terrain or water). As such, aircraft **100** may be any type of airplane (regardless of size or propulsion means, ranging from large, turbine-powered commercial airplanes to small, electrically-powered drones), rotorcraft (helicopter, gyrocopter), lighter-than-air vessel (hot-air balloon, blimp), or glider, for example. Aircraft **100** may be "manned" in the conventional sense that the flight crew is present within the aircraft **100,** or it may be manned remotely.

As schematically depicted in FIG. 1, system **102** includes the following components or subsystems, each of which may assume the form of a single device or multiple interconnected devices: a controller circuit **104** operationally coupled to: a HMI **106** (human-machine interface); a communications circuit **108;** an avionic display system **114;** and, one or more on-board systems and sensors **30.** In various embodiments, the controller circuit **104** communicates with the other components of the system **102** via a communication bus **105.**

The human-machine interface, HMI **106,** may include a display device **20** and a user input device (UI) **24.** In various embodiments, the HMI **106** includes at least one instance of an integration of the user input device **24** and a display device **20** (e.g., a touch screen display). In various embodiments, the HMI **106** may include a user input device **24** such as, any combination of a keyboard, cursor control device, voice input device, gesture input apparatus, or the like.

The avionic display system **114** is configured to receive and process information from various on-board aircraft systems, sensors **(30),** and databases (supplied via the communication bus **105**), perform display processing and graphics processing, and to drive the display device **20** to render features in one or more avionic displays **22.** The term "avionic display" is defined as synonymous with the term "aircraft-related display" and "cockpit display" and encompasses displays generated in textual, graphical, cartographical, and other formats. In various embodiments, the avionic display **22** is a primary flight display (PFD) or a navigation display. In various embodiments, the avionic display **22** can be, or include, any of various types of lateral displays and vertical situation displays on which map views and symbology, text annunciations, and other graphics pertaining to flight planning are presented for a pilot to view.

As is described in more detail below, the avionic display **22** generated and controlled by the system **102** can include graphical user interface (GUI) objects and alphanumerical input/output displays of the type commonly presented on the screens of MCDUs, as well as Control Display Units (CDUs) generally. Specifically, embodiments of the avionic display **22** include one or more two dimensional (2D) avionic displays, such as a horizontal (i.e., lateral) navigation display or vertical navigation display; and/or on one or more three dimensional (3D) avionic displays, such as a Primary Flight Display (PFD) or an exocentric 3D avionic display.

Accordingly, the display device **20** may be configured as a multi-function display (MFD) to include any number and type of image generating devices on which one or more avionic displays **22** may be produced. The display device **20** may embody a touch screen display. When the system **102** is utilized for a manned aircraft, display device **20** may be affixed to the static structure of the Aircraft cockpit as, for example, the aforementioned Head Up Display (HUD) unit, or a Head Down Display (HDD). Alternatively, display device **20** may assume the form of a movable display device (e.g., a pilot-worn display device) or a portable display device, such as an Electronic Flight Bag (EFB), a laptop, or a tablet computer carried into the Aircraft cockpit by a pilot.

In various embodiments, the HMI **106** further includes or has integrated therein an audio system capable of emitting speech and sounds, as well as of receiving speech input. In various embodiments, the HMI **106** may include any of: a graphical user interface (GUI), a speech recognition system, and a gesture recognition system. Via various display and graphics systems processes, the controller circuit **104** and avionic display system **114** may command and control the generation, by the HMI **106,** of a variety of graphical user interface (GUI) objects or elements described herein, including, for example, tabs, buttons, sliders, and the like, which are used to prompt a user to interact with the human-machine interface to provide user input, and to activate respective functions and provide user feedback, responsive to received user input at the GUI object.

The on-board systems and sensors **30** generally include a position-determining system **110,** a sensor system **112,** one or more database(s) **116,** and a flight management system (FMS) **118.**

The position-determining system **110** may include a variety of sensors and performs the function of measuring and supplying various types of aircraft status data and measurements to controller circuit **104** and other aircraft systems (via the communication bus 105) during aircraft flight. In various embodiments, the aircraft status data includes, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data. The position-determining system **110** may be realized as one or more of a global positioning system (GPS), inertial reference system (IRS), or a radio-based navigation system *(e.g.,* VHF omni-directional radio range (VOR) or long-range aid to navigation (LORAN)), and it may include one or more navigational radios or other sensors suitably configured to support operation of the aircraft **100.**

In some embodiments, the position-determining system **110** may also obtain and/or determine the heading of the aircraft **100** (*i.e.,* the direction that aircraft **100** is traveling relative to some reference) using a magnet compass or a magnetometer, for example. The position-determining system **110** may also include a barometric altimeter such that the position of the aircraft **100** may be additionally determined with reference to a barometric altitude. In some embodiments, the GPS may alternatively or additionally provide altitude information as part of the position-determining system **110.** As such, in an exemplary embodiment, the position-determining system **110** is capable of obtaining and/or determining the instantaneous position and altitude of the aircraft **100,** and the position-determining system **110** generates aircraft status data for the aircraft, including the current location of the aircraft **100** *(e.g.,* the latitude and longitude) and the altitude and heading of the aircraft **100.** The position-determining system **110** may provide this aircraft status data to the controller circuit **104** and the flight management system (FMS) **118** to support their operation, as described herein.

The sensor system **112,** as used herein, is a forward-facing sensor system mounted on the mobile platform **100,** configured to obtain real-time sensor images. During aircraft operation at an airport, the sensor system **112** provides a sensor image frame depicting airport features surrounding the aircraft position and location. Non-limiting examples of the sensor system **112** include a camera, EVS Infrared, and millimeter wave system. In some embodiments, the sensor system **112** includes a camera and associated circuitry.

In various embodiments, onboard database(s) **116** may be used to store two- or three-dimensional map data, including airport features data, geographical (terrain), buildings, bridges, and other structures, street maps, including the navigational databases **116.** In practice, the one or more database(s) **116** may be realized as two of two or more different onboard databases, each being a computer-readable storage media or memory. Specifically, the database(s) **116** include a chart database and a NOTAM database. The data stored in the navigation database(s) and Charts and NOTAM databases **116** may be regulated and periodically updated, as directed by a regulating entity. The chart database **116** may store a plurality of pre-loaded charts associated with the FP.

FMS **118** provides the primary navigation, flight planning, and route determination and *en route* guidance for the aircraft **100.** The FMS **118** may contribute aircraft status data provided to controller circuit **104,** such as, the aircraft's current position, attitude, orientation, and flight direction (*e.g.,* heading, course, track, *etc.),* the aircraft's airspeed, ground speed, altitude (*e.g.,* relative to sea level), pitch, and other important flight information if such information is desired. In various embodiments, FMS **118** may include any suitable position and direction determination devices that are capable of providing controller circuit **104** with at least an aircraft's current position (*e.g.,* in latitudinal and longitudinal form), the real-time direction (heading, course, track, *etc.*) of the aircraft in its flight path, and other important flight information (*e.g.,* airspeed, altitude, pitch, attitude, *etc.).* FMS **118** and controller circuit **104** cooperate to guide and control aircraft **100** during all phases of operation, as well as to provide other systems of aircraft **100** with flight data generated or derived from FMS **118.**

The system **102** is capable of receiving NOTAMs from different sources. For example, external sources **50** includes a source of a real-time NOTAM, such as, a flight data center (FDC) and/or an air traffic control (ATC), e.g., via controller pilot data link communication (CPDLC), and may include a weather subscription service, other subscription services, a traffic monitoring service, neighbor traffic, ground stations, and the like. When a NOTAM is real-time, it may contain vital information about changes/updates in charts which may not be present in the plurality of pre-loaded charts stored in the chart database, which is generally loaded on the Aircraft prior to operation. NOTAMs generally contain a Chart Name/Index along with related chart information.

It should be appreciated that aircraft **100** includes many more additional features (systems, databases, *etc.*) than the illustrated systems **106** - **118.** For purposes of simplicity of illustration and discussion, however, the illustrated aircraft **100** omits these additional features.

The term "controller circuit," as appearing herein, broadly encompasses those components utilized to carry-out or otherwise support the processing functionalities of the system 102. Accordingly, in various embodiments, the controller circuit **104** can be implemented as a programmable logic array, application specific integrated circuit, system on a chip (SOC), or other similar firmware, as well as by a combination of any number of dedicated or shared processors, flight control computers, navigational equipment pieces, computer-readable storage devices (including or in addition to memory **7**), power supplies, storage devices, interface cards, and other standardized components.

In various embodiments, as depicted in FIG. 1, the controller circuit **104** is realized as an enhanced computer system, having one or more processors **5** operationally coupled to computer-readable storage media or memory **7,** having stored therein at least one novel firmware or software program (generally, computer-readable instructions that embody an algorithm) for carrying-out the various process tasks, calculations, and control/display functions described herein. The memory **7,** may include volatile and nonvolatile storage in read-only memory (ROM), random-access memory (RAM), and keep-alive memory (KAM), for example. KAM is a persistent or non-volatile memory that may be used to store various operating variables while the processor **5** is powered down. The memory **7** may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the processor **5.**

During operation, the controller circuit **104,** and hence the processor **5,** may be programmed with and execute the at least one firmware or software program (for example, program **9,** described in more detail below) that embodies an algorithm for receiving, processing, enabling, generating, updating and rendering, described herein, to thereby perform the various process steps, tasks, calculations, and control/display functions described herein.

Controller circuit **104** may exchange data, including real-time wireless data, with one or more external sources **50** to support operation of the system **102** in embodiments. In this case, the controller circuit **104** may utilize the communication bus **105** and communications circuit **108.**

In various embodiments, the communications circuit **108** includes the hardware and software to support one or more communication protocols for wireless communication between the processor **5** and external sources, such as satellites, the cloud, communication towers and ground stations. In various embodiments, the communications circuit **108** supports wireless data exchange over a communications network, such as a public or private network implemented in accordance with Transmission Control Protocol/Internet Protocol architectures or other conventional protocol standards. Encryption and mutual authentication techniques may be applied, as appropriate, to ensure data security. In various embodiments, the communications circuit **108** supports communication with technicians, and/or one or more storage interfaces for direct connection to storage apparatuses. In various embodiments, the communications circuit **108** is integrated within the controller circuit **104.**

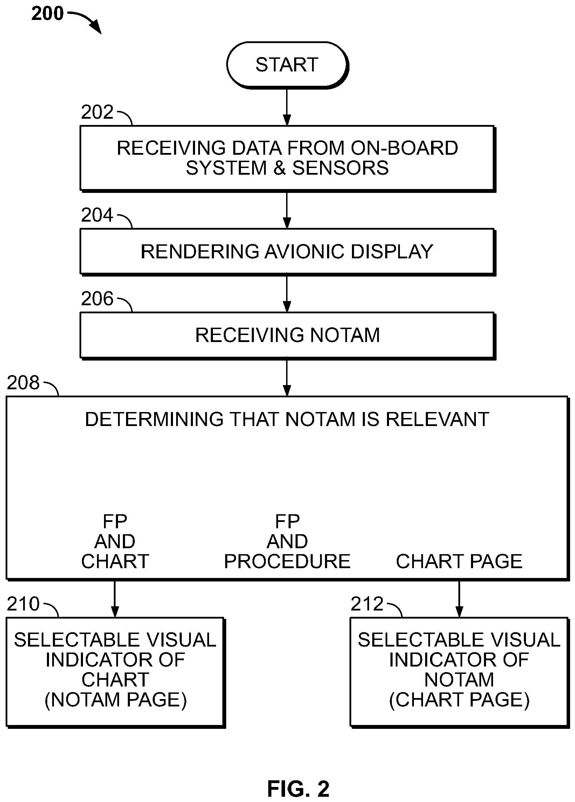

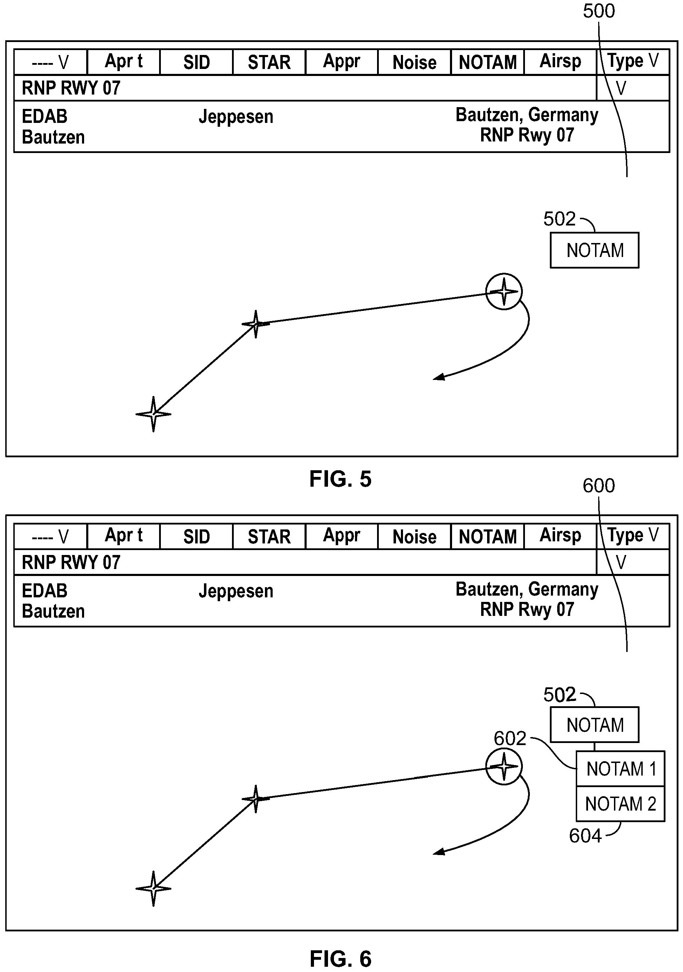

Turning now to FIG. 2, and with continued reference to FIG. 1, a flowchart of a method **200** for correlating a Notice to Airmen (NOTAM) with a chart displayed on an avionic display in a cockpit of an aircraft is described, in accordance with exemplary embodiments of the present disclosure. For illustrative purposes, the following description of method **200** may refer to elements mentioned above in connection with FIG. 1, for example, the tasks/operations may be performed by the controller circuit **104.** In practice, portions of method **200** may be performed by different components of the described system. It should be appreciated that method **200** may include any number of additional or alternative tasks, the tasks shown in FIG. 6 need not be performed in the illustrated order, and method **200** may be incorporated into a more comprehensive procedure or method having additional functionality not described in detail herein. Moreover, one or more of the tasks shown in FIG. 6 could be omitted from an embodiment of the method **200** as long as the intended overall functionality remains intact.

**At 202,** the system **102** is receiving data from various on-board systems and sensors **30.** Received data at **202** includes a flight plan (FP). At **202,** the system **102** is assumed to have received pre-loaded charts for the trip associated with the FP and required updates to databases **116** and may also be receiving data from external sources **50.**

**At 204,** the system is rendering an avionic display **22,** as described above. The system is rendering an avionic display **22** comprising a chart page or a NOTAM page. This is a logical "or", which means not only that, in various embodiments, at **204** the system **102** is rendering the avionic display **22** comprising either a chart page or a NOTAM page, but that in other embodiments, at **204,** the system **102** is rendering the avionic display **22** comprising both a chart page and a NOTAM page, e.g., as two distinct windows on a MFD.

**At 206,** the system receives a NOTAM. In various embodiments, the received NOTAM is real-time, received via an external source **50.** In various embodiments, the received NOTAM is from a pre-loaded NOTAM storage.

**At 208,** the system **102** processes the NOTAM to determine whether it is "relevant." In various embodiments, to determine relevance, the NOTAM messages are parsed by the system **102** to identify the Chart Name/Index and then the system **102** uses the parsed information to find to the corresponding chart in the chart database.

In an embodiment, determining relevance includes parsing the NOTAM to identify at least one chart referenced in the NOTAM, and then comparing the NOTAM referenced chart to either the FP or a currently displayed chart page on the avionic display. In various embodiments, the system **102** identifies the NOTAM as relevant when the NOTAM is related to the FP and references a chart of the plurality of pre-loaded charts used in the FP.

In various embodiments, the system **102** identifies the NOTAM as relevant when the NOTAM is concurrently related to the FP and references procedures embodied in the FP (i.e., it will affect the FP procedurally). Accordingly, in various embodiments, determining that the NOTAM is relevant to the FP is a function of either a chart that is referenced in the NOTAM, or a procedure referenced in the NOTAM.

**At 208,** in various embodiment, the system **102** further identifies the NOTAM as relevant when a chart page is displayed on the avionic display, and the NOTAM is related to the chart displayed on the chart page of the avionic display.

With this methodology, at **208,** the system **102** establishes a two-way correlation between NOTAMs and Charts. This will help the Pilot to easily open a Chart from a NOTAM and vice-versa.

Moving into **210** and **212,** the system **102** renders a selectable visual indicator about the NOTAM for the pilot, and the form of the visual indicator is related to the page or window currently displayed on the avionic display. For example, at **210,** when the pilot is displaying a NOTAM page, which is usually alphanumeric, the system renders a selectable visual indicator of the chart referenced on the NOTAM page; this indicates that the real-time NOTAM or the NOTAM retrieved from the pre-loaded database is relevant and what chart or procedure it references. In some embodiments, the selectable visual indicator of the chart referenced is rendered as an underline or hyperlink of text naming the referenced chart. In another example, at **210,** the system **102** is configured to render the selectable visual indicator of the chart referenced as a highlight or color change of text naming the referenced chart.

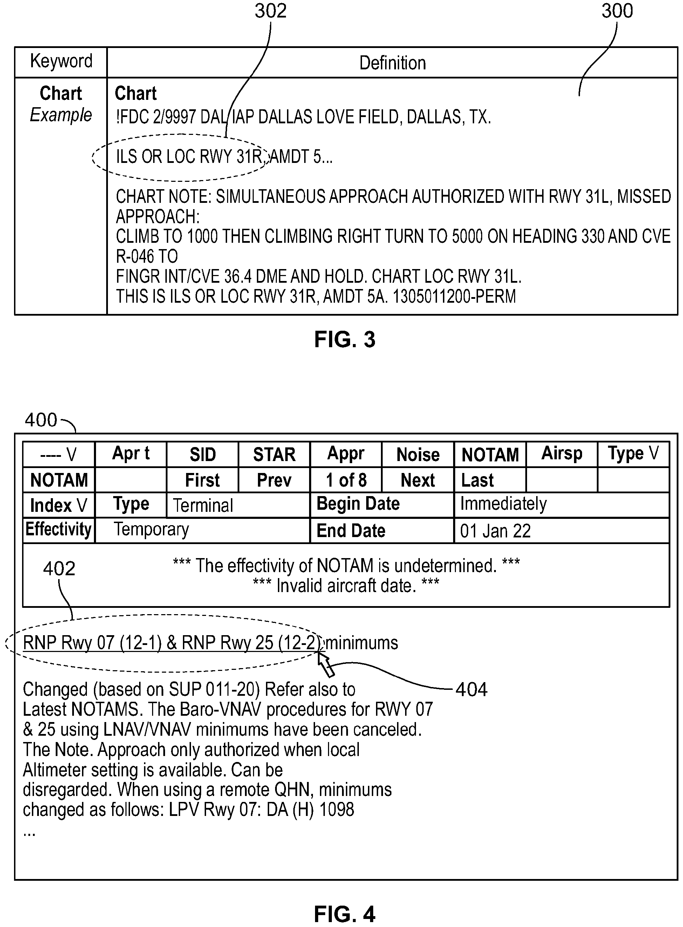

In some embodiments, hovering a cursor over the selectable visual indicator may change the cursor appearance (e.g., from an arrow to a pointing hand). Selecting the selectable visual indicator will open a chart page, the open chart page being the chart referenced in the NOTAM. FIGS. 3 and 4 illustrate how the system **102** may visually distinguish the chart referenced in the NOTAM from other text in the NOTAM.

**At 212,** when the pilot is displaying a chart page, the system **102** renders a selectable visual indicator of the NOTAM when both the NOTAM is relevant, and the chart page is rendered on the avionic display. In some embodiments, the selectable visual indicator of the NOTAM is a pop-up alphanumeric message comprising information from the real-time NOTAM or the one retrieved from the pre-loaded database. In other embodiments, the selectable visual indicator of the NOTAM is a pop-up selectable graphical user interface (GUI) object prompting user attention to the NOTAM. FIGS. 5-8 illustrate various GUI objects overlaid on a chart page, responsive to information in the NOTAM. After **210** or **212,** the system **102** may cycle back to **206** or end.

An example of a flight data center (FDC) NOTAM text page of an avionic display is shown in FIG. 3 (NOTAM page **300**). Encircled at **302** is a reference to a chart name, "ILS OR LOC RWY **31R,** AMDT5 ..." thus, this FDC NOTAM page includes the chart name. In FIG. 4, a class II NOTAM is depicted (NOTAM page **400**), showing a chart name and chart index, encircled at 402. Additionally, FIG. 4 depicts rendering a selectable visual indicator to distinguish the chart: the chart name and index **402** are rendered underlined, as may be in practice a hypertext link. Additionally, a cursor, **404** is shown. The cursor **404** can be hovered over the chart name and index **402** to select it.

FIGS. 5-8 are illustrations showing various selectable visual indicators of the real-time NOTAM on the chart page. In FIG. 5, chart page **500** is displayed on the avionic display **22.** When the system **102** determines that the NOTAM is relevant, it renders the selectable visual indicator of the real-time NOTAM or the one retrieved from the pre-loaded database **502.** In the example, the selectable visual indicator of the real-time NOTAM **502** on the chart page as a pop-up graphical user interface (GUI) object with the text "NOTAM," prompting user attention to the NOTAM.

FIG. 6 provides an example of when the system **102** identifies two relevant NOTAMs, NOTAM 1, and NOTAM 2. The chart page **600** again has the selectable visual GUI indicator of the real-time NOTAM or the one retrieved from the pre-loaded database **502,** and responsive to receiving a user selection of "NOTAM" **502,** the system **102** renders a pop-up graphical user interface (GUI) object with the text "NOTAM 1" **602,** and a pop-up graphical user interface (GUI) object with the text "NOTAM 2" **604,** prompting user attention to the presence of two relevant NOTAMs to the chart displayed on the chart page **600.**

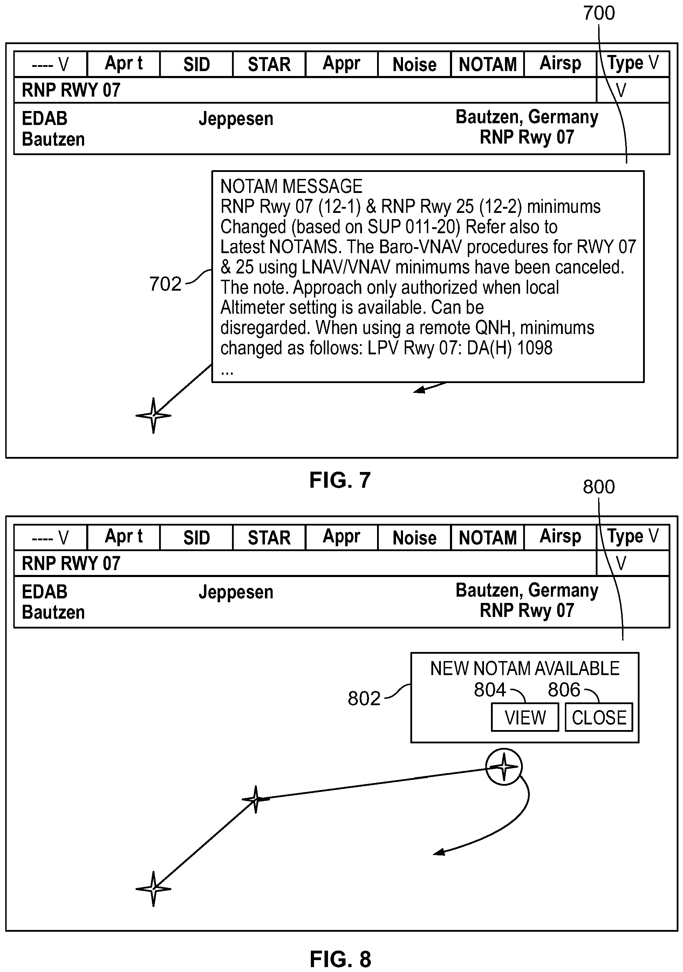

FIG. 7 provides an example of a system **102** response to the user selecting a NOTAM GUI object, e.g. selecting NOTAM 1 or NOTAM 2 in FIG. 6 or selecting NOTAM in FIG. 5. Responsive to receiving a user selection of the NOTAM GUI object, the system **102** renders the text contents of the NOTAM (text block **702**).

FIG. 8 provides an example of what the system **102** may display for the pilot when a new NOTAM comes in and is identified as relevant after the pilot has been viewing a chart on the chart page **800** for a while. In this example, the system **102** may render a pop-up graphical user interface (GUI) object **802,** e.g., with the text "NEW NOTAM AVAILABLE," and that GUI object **802** may further have a selectable "view" button **804** and a selectable "close" button **806.** Responsive to receiving a user selection of "view," the system may open the text of the new NOTAM, as shown in 702. Responsive to receiving a user selection of "close," the system **102** may close the GUI object **802.**

Accordingly, the present disclosure has provided several embodiments of systems and methods for correlating a Notice to Airmen (NOTAM) with a chart on an avionic display in a cockpit of an aircraft. Provided embodiments correlate or cross-reference a NOTAM with a chart referenced in the NOTAM. With this methodology, at **208,** the system **102** establishes a two-way correlation between NOTAMs and Charts. This will help the Pilot to easily open a Chart from a NOTAM and vice-versa. The renderings of the selectable indicators for a chart and/or for an associated NOTAM decrease cognitive load and provide an objectively improved HMI over available display systems.

Although an exemplary embodiment of the present disclosure has been described above in the context of a fully-functioning computer system (e.g., system **102** described above in conjunction with FIG. 1), those skilled in the art will recognize that the mechanisms of the present disclosure are capable of being distributed as a program product (e.g., an Internet-disseminated program 9 or software application) and, further, that the present teachings apply to the program product regardless of the particular type of computer-readable media (e.g., hard drive, memory card, optical disc, etc.) employed to carry-out its distribution.

Terms such as "comprise," "include," "have," and variations thereof are utilized herein to denote non-exclusive inclusions. Such terms may thus be utilized in describing processes, articles, apparatuses, and the like that include one or more named steps or elements but may further include additional unnamed steps or elements.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing the exemplary embodiment or exemplary embodiments. It should be understood that various changes can be made in the function and arrangement of elements without departing from the scope of the disclosure as set forth in the appended claims and the legal equivalents thereof.

## Claims

1. A system (100) for correlating a Notice to Airmen, NOTAM, with a chart on an avionic display in a cockpit of an aircraft, the system comprising:
a flight management system, FMS (118);
a position determining system (110);
a database (116) comprising a plurality of pre-loaded charts;
a source (50) of a NOTAM;
a controller circuit (104) operably coupled to the FMS, position determining system, database, and source of the NOTAM, the controller circuit configured by programming instructions to, receive, from the FMS, a flight plan, FP;
receive, from the position determining system, a position and location of the aircraft; render the avionic display comprising a chart page or a NOTAM page;
receive the NOTAM;
**characterised in that** the controller circuit is further configured by programming instructions to:
determine that the NOTAM is relevant, when the NOTAM is concurrently related to the FP and references a chart of the plurality of pre-loaded charts, and render a selectable visual indicator of the chart on the NOTAM page of the avionic display, responsive thereto; and
when the NOTAM is related to the chart page displayed on the avionic display, (i) further identify the NOTAM as relevant, and (ii) render a selectable visual indicator of the NOTAM on the chart page displayed on the avionic display, responsive thereto.

2. The system of claim 1, wherein the controller circuit is further configured to generate the selectable visual indicator of the NOTAM on the chart page as a pop-up alphanumeric message comprising information from the NOTAM.

3. The system of claim 1, wherein the controller circuit is further configured to generate the selectable visual indicator of the NOTAM on the chart page as a pop-up graphical user interface, GUI, object prompting user attention to the NOTAM.

4. The system of claim 1, wherein the controller circuit is further configured to identify that the NOTAM is relevant by parsing text of the NOTAM into a chart name or chart index.

5. The system of claim 1, wherein the FMS further provides a procedure, and
wherein the controller circuit is further configured to:
determine that the NOTAM is relevant, when the NOTAM is concurrently related to the FP and references the procedure; and
render a selectable visual indicator of the procedure on the NOTAM page of the avionic display.

6. A method for correlating a Notice to Airmen, NOTAM, with a chart on an avionic display in a cockpit of an aircraft, the method comprising:
at a controller circuit,
receiving, from a flight management system, FMS, a flight plan, FP; receiving, from a position determining system, a position and location of the aircraft; rendering an avionic display comprising a chart page or a NOTAM page;
receiving a NOTAM;
**characterised in that** the method further comprises:
determining that the NOTAM is relevant, when the NOTAM is concurrently related to the FP and references a chart of a plurality of pre-loaded charts onboard the aircraft, and rendering a selectable visual indicator of the chart on the NOTAM page of the avionic display responsive thereto; and
when the NOTAM is related to the chart page displayed on the avionic display, further identify the NOTAM as relevant, and rendering a selectable visual indicator of the NOTAM on the chart page displayed on the avionic display, responsive thereto.

7. The method of claim 6, further comprising rendering the selectable visual indicator of the chart on the NOTAM page as an underline or hyperlink of text naming the referenced chart.

8. The method of claim 6, further comprising rendering the selectable visual indicator of the chart on the NOTAM page as a highlight or color change of text naming the referenced chart.

9. The method of claim 6, further comprising rendering the selectable visual indicator of the NOTAM on the chart page as a pop-up alphanumeric message comprising information from the NOTAM.

10. The method of claim 6, further comprising rendering the selectable visual indicator of the NOTAM on the chart page as a pop-up graphical user interface, GUI, object prompting user attention to the NOTAM.

11. The method of claim 6, further comprising identifying that the NOTAM is relevant by parsing text of the NOTAM into a chart name or chart index.

12. The method of claim 6, wherein receiving the NOTAM comprises receiving a pre-loaded NOTAM from an on-board database.

13. The method of claim 6, wherein receiving the NOTAM comprises receiving a real-time NOTAM from an external source.

14. The method of claim 6, further comprising:
determining that the NOTAM is relevant, when the NOTAM references a procedure that is related to the FP; and
rendering a selectable visual indicator of the procedure on the NOTAM page of the avionic display.

15. The method of claim 6, wherein each chart of the plurality of pre-loaded charts is for one or more of: Airport Diagrams, Departure, Arrival, Approach, Airspace, and Noise abatement.

## Patentansprüche

1. System (100) zum Korrelieren einer Mitteilung an Luftfahrer, NOTAM, mit einer Karte auf einer Avionik-Anzeige in einem Cockpit eines Flugzeugs, das System umfassend:
ein Flugmanagementsystem, FMS (118);
ein Positionsbestimmungssystem (110);
eine Datenbank (116), die eine Vielzahl von vorgeladenen Karten umfasst;
eine Quelle (50) einer NOTAM;
eine Steuerschaltung (104), die betriebsfähig mit dem FMS, dem Positionsbestimmungssystem, der Datenbank und der Quelle der NOTAM gekoppelt ist, wobei die Steuerschaltung durch Programmieren von Anweisungen dazu konfiguriert ist,
von dem FMS einen Flugplan, FP, zu empfangen;
von dem Positionsbestimmungssystem eine Position und einen Standort des Flugzeugs zu empfangen;
die Avionik-Anzeige, die eine Kartenseite oder eine NOTAM-Seite umfasst, wiederzugeben;
die NOTAM zu empfangen;
**gekennzeichnet dadurch, dass** die Steuerschaltung ferner durch Programmieren von Anweisungen dazu konfiguriert ist,
zu bestimmen, dass die NOTAM relevant ist, wenn die NOTAM gleichzeitig in Zusammenhang mit dem FP steht und eine Karte aus der Vielzahl von vorgeladenen Karten referenziert, und als Antwort darauf einen auswählbaren optischen Indikator der Karte auf der NOTAM-Seite der Avionik-Anzeige wiederzugeben; und
wenn die NOTAM in Zusammenhang mit der auf der Avionik-Anzeige angezeigten Kartenseite steht, (i) ferner die NOTAM als relevant zu identifizieren, und (ii) als Antwort darauf einen auswählbaren optischen Indikator der NOTAM auf der auf der Avionik-Anzeige angezeigten Kartenseite wiederzugeben.

2. System nach Anspruch 1, wobei die Steuerschaltung ferner dazu konfiguriert ist, den auswählbaren optischen Indikator der NOTAM auf der Kartenseite als eine alphanumerische Popup-Nachricht zu erzeugen, die Informationen von der NOTAM umfasst.

3. System nach Anspruch 1, wobei die Steuerschaltung ferner dazu konfiguriert ist, den auswählbaren optischen Indikator der NOTAM auf der Kartenseite als ein Popup-Objekt einer graphischen Benutzerschnittstelle, GUI, zu erzeugen, das die Benutzeraufmerksamkeit auf die NOTAM lenkt.

4. System nach Anspruch 1, wobei die Steuerschaltung ferner dazu konfiguriert ist, zu identifizieren, dass die NOTAM relevant ist, durch Parsen von Text der NOTAM in einen Kartennamen oder Kartenindex.

5. System nach Anspruch 1, wobei das FMS ferner eine Vorgehensweise bereitstellt, und wobei die Steuerschaltung ferner dazu konfiguriert ist:
zu bestimmen, dass die NOTAM relevant ist, wenn die NOTAM gleichzeitig in Zusammenhang mit dem FP steht und die Vorgehensweise referenziert; und
einen auswählbaren optischen Indikator der Vorgehensweise auf der NOTAM-Seite der Avionik-Anzeige wiederzugeben.

6. Verfahren zum Korrelieren einer Mitteilung an Luftfahrer, NOTAM, mit einer Karte auf einer Avionik-Anzeige in einem Cockpit eines Flugzeugs, das Verfahren umfassend:
an einer Steuerschaltung,
Empfangen, von einem Flugmanagementsystem, FMS, eines Flugplans, FP;
Empfangen, von einem Positionsbestimmungssystem, einer Position und eines Standorts des Flugzeugs;
Wiedergeben einer Avionik-Anzeige, die eine Kartenseite oder eine NOTAM-Seite umfasst;
Empfangen einer NOTAM;
**gekennzeichnet dadurch, dass** das Verfahren ferner Folgendes umfasst:
Bestimmen, dass die NOTAM relevant ist, wenn die NOTAM gleichzeitig in Zusammenhang mit dem FP steht und eine Karte aus einer Vielzahl von vorgeladenen Karten an Bord des Flugzeugs referenziert, und als Antwort darauf, Wiedergeben eines auswählbaren optischen Indikators der Karte auf der NOTAM-Seite der Avionik-Anzeige; und
wenn die NOTAM in Zusammenhang mit der auf der Avionik-Anzeige angezeigten Kartenseite steht, ferner Identifizieren der NOTAM als relevant, und als Antwort darauf Wiedergeben eines auswählbaren optischen Indikators der NOTAM auf der auf der Avionik-Anzeige angezeigten Kartenseite.

7. Verfahren nach Anspruch 6, ferner umfassend Wiedergeben des auswählbaren optischen Indikators der Karte auf der NOTAM-Seite als Unterstreichung oder Hyperlink von Text, der die referenzierte Karte nennt.

8. Verfahren nach Anspruch 6, ferner umfassend Wiedergeben des auswählbaren optischen Indikators der Karte auf der NOTAM-Seite als Hervorhebung oder mit veränderter Farbe von Text, der die referenzierte Karte nennt.

9. System nach Anspruch 6, ferner umfassend Wiedergeben des auswählbaren optischen Indikators der NOTAM auf der Kartenseite als eine alphanumerische Popup-Nachricht, die Informationen von der NOTAM umfasst.

10. System nach Anspruch 6, ferner umfassend Wiedergeben des auswählbaren optischen Indikators der NOTAM auf der Kartenseite als ein Popup-Objekt einer graphischen Benutzerschnittstelle, GUI, das die Benutzeraufmerksamkeit auf die NOTAM lenkt.

11. System nach Anspruch 6, ferner umfassend Identifizieren, dass die NOTAM relevant ist, durch Parsen von Text der NOTAM in einen Kartennamen oder Kartenindex.

12. Verfahren nach Anspruch 6, wobei das Empfangen der NOTAM das Empfangen einer vorgeladenen NOTAM von einer bordeigenen Datenbank umfasst.

13. Verfahren nach Anspruch 6, wobei das Empfangen der NOTAM das Empfangen einer Echtzeit-NOTAM von einer externen Quelle umfasst.

14. Verfahren nach Anspruch 6, ferner umfassend:
Bestimmen, dass die NOTAM relevant ist, wenn die NOTAM eine Vorgehensweise referenziert, die in Zusammenhang mit dem FP steht; und
Wiedergeben eines auswählbaren optischen Indikators der Vorgehensweise auf der NOTAM-Seite der Avionik-Anzeige.

15. Verfahren nach Anspruch 6, wobei jede Karte der Vielzahl von vorgeladenen Karten für eines oder mehrere aus Folgendem steht: Flughafen-Diagramme, Abflug, Ankunft, Landung, Luftraum und Lärmminderung.

## Revendications

1. Système (100) permettant de corréler un Message aux Navigants Aériens, NOTAM, avec une carte sur un affichage avionique dans un poste de pilotage d'un aéronef, le système comprenant:
un système de gestion de vol, FMS (118) ;
un système de détermination de position (110) ;
une base de données (116) comprenant une pluralité de cartes préchargées ;
une source (50) d'un NOTAM ;
un circuit de contrôle (104) couplé de manière opérationnelle au FMS, au système de détermination de position, à la base de données et à la source du NOTAM, le circuit de contrôle étant configuré par des instructions de programmation pour,
recevoir, depuis le FMS, un plan de vol, FP ;
recevoir, depuis le système de détermination de position, une position et une localisation de l'aéronef ;
présenter l'affichage avionique comprenant une page de la carte ou une page NOTAM ;
recevoir le NOTAM ;
**caractérisé en ce que** le circuit de contrôle est en outre configuré par des instructions de programmation pour :
déterminer que le NOTAM est pertinent, lorsque le NOTAM est simultanément lié au FP et qu'il fait référence à une carte parmi la pluralité de cartes préchargées, et présenter, en réponse à cela, un indicateur visuel sélectionnable de la carte sur la page NOTAM de l'affichage avionique ; et
lorsque le NOTAM est lié à la page de la carte affichée sur l'affichage avionique, (i) identifier en outre le NOTAM comme pertinent et (ii) présenter, en réponse à cela, un indicateur visuel sélectionnable du NOTAM sur la page de la carte affichée sur l'affichage avionique.

2. Système de la revendication 1, dans lequel le circuit de contrôle est en outre configuré pour générer l'indicateur visuel sélectionnable du NOTAM sur la page de la carte sous forme d'un message alphanumérique contextuel comprenant des informations issues du NOTAM.

3. Système de la revendication 1, dans lequel le circuit de contrôle est en outre configuré pour générer l'indicateur visuel sélectionnable du NOTAM sur la page de la carte sous forme d'un objet d'interface utilisateur graphique, GUI, contextuel attirant l'attention de l'utilisateur sur le NOTAM.

4. Système de la revendication 1, dans lequel le circuit de contrôle est en outre configuré pour identifier que le NOTAM est pertinent en analysant le texte du NOTAM pour en déduire un nom de carte ou un index de carte.

5. Système de la revendication 1, dans lequel le FMS fournit en outre une procédure, et dans lequel le circuit de contrôle est en outre configuré pour :
déterminer que le NOTAM est pertinent lorsque le NOTAM est simultanément lié au FP et qu'il fait référence à la procédure ; et
présenter un indicateur visuel sélectionnable de la procédure sur la page NOTAM de l'affichage avionique.

6. Procédé permettant de corréler un Message aux Navigants Aériens, NOTAM, avec une carte sur un affichage avionique dans un poste de pilotage d'un aéronef, le procédé comprenant :
au niveau d'un circuit de contrôle,
la réception, depuis un système de gestion de vol, FMS, d'un plan de vol, FP ;
la réception, depuis un système de détermination de position, d'une position et d'une localisation de l'aéronef ;
la présentation d'un affichage avionique comprenant une page de la carte ou une page NOTAM ;
la réception d'un NOTAM ;
**caractérisé en ce que** le procédé comprend en outre :
la détermination que le NOTAM est pertinent lorsqu'il est simultanément lié au FP et qu'il fait référence à une carte parmi une pluralité de cartes préchargées à bord de l'aéronef, et la présentation, en réponse à cela, d'un indicateur visuel sélectionnable de la carte sur la page NOTAM de l'affichage avionique ; et
lorsque le NOTAM est lié à la page de la carte affichée sur l'affichage avionique, l'identification en outre du NOTAM comme pertinent, et la présentation, en réponse à cela, d'un indicateur visuel sélectionnable du NOTAM sur la page de la carte affichée sur l'affichage avionique.

7. Procédé de la revendication 6, comprenant en outre la présentation de l'indicateur visuel sélectionnable de la carte sur la page NOTAM sous forme d'un soulignement ou d'un lien hypertexte de texte nommant la carte référencée.

8. Procédé de la revendication 6, comprenant en outre la présentation de l'indicateur visuel sélectionnable de la carte sur la page NOTAM sous forme d'une mise en surbrillance ou d'un changement de couleur du texte nommant la carte référencée.

9. Procédé de la revendication 6, comprenant en outre la présentation de l'indicateur visuel sélectionnable du NOTAM sur la page de la carte sous forme d'un message alphanumérique contextuel comprenant des informations issues du NOTAM.

10. Procédé de la revendication 6, comprenant en outre la présentation de l'indicateur visuel sélectionnable du NOTAM sur la page de la carte sous forme d'un objet d'interface utilisateur graphique, GUI, contextuel attirant l'attention de l'utilisateur sur le NOTAM.

11. Procédé de la revendication 6, comprenant en outre l'identification que le NOTAM est pertinent en analysant le texte du NOTAM pour en déduire un nom de carte ou un index de carte.

12. Procédé de la revendication 6, dans lequel la réception du NOTAM comprend la réception d'un NOTAM préchargé depuis une base de données embarquée.

13. Procédé de la revendication 6, dans lequel la réception du NOTAM comprend la réception d'un NOTAM en temps réel depuis une source externe.

14. Procédé de la revendication 6, comprenant en outre :
la détermination que le NOTAM est pertinent, lorsque le NOTAM fait référence à une procédure liée au FP ; et
la présentation d'un indicateur visuel sélectionnable de la procédure sur la page NOTAM de l'affichage avionique.

15. Procédé de la revendication 6, dans lequel chaque carte de la pluralité de cartes préchargées correspond à l'un ou plusieurs parmi : Diagrammes d'Aéroport, Départ, Arrivée, Approche, Espace Aérien et réduction du Bruit.
